# EUROPEAN PATENT APPLICATION

(11) **EP 1 800 819 A1**
(43) Date of publication of application: **27.06.2007**
(21) Application number: 06077092.2
(22) Date of filing: 23.11.2006
(51) Int. Cl.: B28D 1/12

(54) **Saw blade provided with working segments mounted on a main blade**

(30) Priority: 20.12.2005 NL 1030717
(71) Applicant: Toolbox International B.V., 5431 NS Cuijk (NL)
(72) Inventor: De Haas, Robert Anton, 6524 LC Nijmegen (NL)
(74) Representative: Lips, Hendrik Jan George

(57) **Abstract**

Saw blade (1) provided with working segments (6, 7), which have been distributed across the circumference of a disc-shaped main blade (2). The saw blade (1) is provided with two types of alternating working segments (6, 7), one type being (6) suitable for relatively hard materials and the other (7) for relatively soft materials. The individual working segments (6, 7) are achieved by recesses (3) provided in the circumferential edge of the main blade (2).

## Description

The invention relates to a saw blade provided with working segments, which have been distributed across the circumference of a disc-shaped main blade.

Such saw blades are used for sawing up various types of materials, such as by using a so-called right-angle grinder. The materials to be worked can be both hard materials, such as rock or concrete, and relatively soft materials.

With the known saw blades, the composition of the working segments is adapted to the purpose for which the saw blade will be employed. In particular, the working segments will mostly contain diamond particles.

Although such saw blades meet high requirements, they present a drawback in that during use one must make sure to use the appropriate type of saw blade for certain operations. When using a saw blade having segments suitable for relatively soft materials, the saw blade may get damaged if it is used for a hard material by accident. Thus, when working on various materials, one should either change the saw blade of a tool, or one should have several tools at one's disposal, each being provided with a different type of saw blade. Additionally, in use one should further make sure to use appropriate tool.

The object of the invention is to remove these drawbacks and according to the invention, this object is achieved in that the saw blade is provided with two types of alternating working segments, one type being suitable for relatively hard materials and the other for relatively soft materials.

Surprisingly, it has turned out, that with this alternation of working segments, one single type of saw blade can be used for both relatively hard and relatively soft materials.

This will not damage the saw blade and will not impair the proper action of the saw blade.

The invention will be further explained by means of an example, illustrated in the drawing, in which:

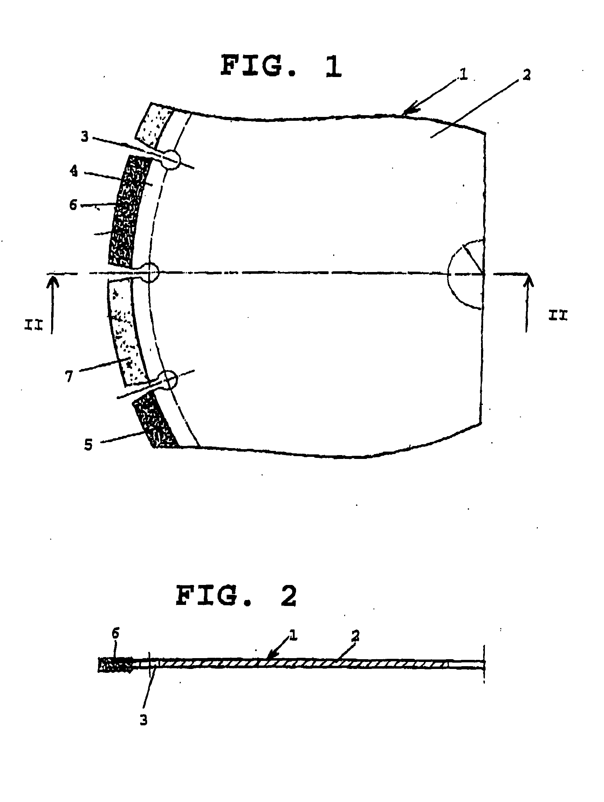

fig. 1 depicts a view of a part of a saw blade according to the invention; and
fig. 2 illustrates a cross-section across the part of fig. 1 according to the line II - II.

The drawing illustrates a saw blade 1, comprising a main blade 2, which can be made of steel or another suitable material, for example. The main blade 2 is provided with the recesses 3 for forming successive circumferential portions 4.

The particular sawing material 5 is provided around the edges of the circumferential portions 4, thus projecting slightly beyond the main blade 2. In this way, alternating working segments 6 and 7, respectively, are achieved, with one segment, e.g. segment 6, being particularly suitable for relatively hard material and the other segment 7 for relatively soft material.

It will be obvious, that only one possible embodiment of a saw blade according to the invention has been illustrated in the drawing and described hereinabove and that modifications can be made without leaving the scope of the invention, as it is indicated in the claims.

## Claims

1. Saw blade (1) provided with working segments (6, 7), which have been distributed across the circumference of a disc-shaped main blade (2), **characterized in that** the saw blade (1) is provided with two types of alternating working segments (6, 7), one type being (6) suitable for relatively hard materials and the other (7) for relatively soft materials.

2. Saw blade according to claim 1, **characterized in that** the individual working segments (6, 7) are achieved by recesses (3) provided in the circumferential edge of the main blade (2).
